# EUROPÄISCHE PATENTSCHRIFT

(11) **EP 3 364 181 B1**
(45) Veröffentlichungstag und Bekanntmachung des Hinweises auf die Patenterteilung: **10.04.2019**
(21) Anmeldenummer: 17157078.1
(22) Anmeldetag: 21.02.2017
(51) Int. Cl.: G01N 27/22

(54) **FEUCHTESENSORANORDNUNG MIT ESD-SCHUTZ**
MOISTURE SENSOR ASSEMBLY WITH ESD-PROTECTION
SYSTÈME DE CAPTEUR D'HUMIDITÉ AVEC UNE PROTECTION ESD

(43) Veröffentlichungstag der Anmeldung: 22.08.2018
(73) Patentinhaber: E+E ELEKTRONIK GES.M.B.H., 4209 Engerwitzdorf (AT)
(72) Erfinder: HAIDER, Albin, 4211 Alberndorf (AT)
(74) Vertreter: Hofmann, Ernst

(56) Entgegenhaltungen:
- EP-A1- 2 755 023
- EP-A1- 3 106 841
- WO-A1-2015/122486
- WO-A1-2016/132590
- WO-A2-01/40784
- WO-A2-2014/185771
- US-A1- 2015 226 688

## Beschreibung

### GEBIET DER TECHNIK

Die vorliegende Erfindung betrifft eine Feuchtesensor-Anordnung gemäß dem Oberbegriff von Anspruch 1.

### STAND DER TECHNIK

Aus der EP 2 755 023 A1 ist eine Feuchtesensor-Anordnung bekannt, die einen integrierten Signalverarbeitungsbaustein umfasst, auf dem ein kapazitiver Feuchtesensor angeordnet ist. Der kapazitive Feuchtesensor ist als Plattenkondensator mit einer flächigen Grundelektrode und einer feuchtedurchlässigen, flächigen Deckelektrode ausgebildet, zwischen denen eine dielektrische Messschicht angeordnet ist, die eine feuchteabhängige Kapazität besitzt. Um den Signalverarbeitungsbaustein und den kapazitiven Feuchtesensor herum wird ferner eine Umkapselung bzw. Vergussmasse angeordnet, um die Anordnung gegenüber mechanischer Beschädigung und den Signalverarbeitungsbaustein gegenüber Feuchtigkeit zu schützen. Im Bereich der Deckelektrode weist die Umkapselung hierbei eine Ausnehmung auf, über die das umgebende Medium in Kontakt mit der porösen Deckelektrode gelangen kann. Die erzeugten Messsignale werden im Signalverarbeitungsbaustein weiterverarbeitet und können dabei auch geeignet für eine Übertragung an eine Folgeelektronik aufbereitet werden.

Wird eine solche Feuchtesensoranordnung beispielsweise auf einer Platine angeordnet, so kann es bei der weiteren Verarbeitung der Platine zu unkontrollierten elektrostatischen Entladungen (Electrostatic Discharge, ESD) kommen. Derartige Entladungen können die Bauelemente auf der Platine zerstören; beispielsweise kann die Feuchtesensor-Anordnung und dabei insbesondere der Signalverarbeitungsbaustein beschädigt werden, wenn es zu einer Entladung im Bereich der Ausnehmung der Umkapselung kommt. Aus der genannten Druckschrift sind keine Maßnahmen bekannt, die eine solche Beschädigung der Feuchtesensor-Anordnung zuverlässig verhindern könnten.

Die WO 01/40784 A2 offenbart einen Sensor zum Ausmessen von Parametern eines Fluids. Der Sensor umfasst eine auf einem Halbleiterchip angeordnete Messanordnung, die über ein Kunststoff-Gehäuse geschützt wird. Ein Teil des Halbleiterchips ist ferner mit einer Abdichtmasse bedeckt, um den Chip vor unerwünschten Umwelteinflüssen zu schützen. Das Kunststoff-Gehäuse ist schwach leitend ausgebildet oder mit einem leitfähigen Material beschichtet, um die empfindlichen Signalverarbeitungsbausteine im Halbleiterchip abzuschirmen. Ohne weitere Maßnahmen ist auch bei diesem Sensor kein zuverlässiger Schutz gegen unkontrollierte elektrische Entladungen gewährleistet.

Ein weiterer umkapselter Gassensor ist aus der EP 3 106 841 A1 der Anmelderin bekannt, der einen gassensitiven Sensor auf einem Signalverarbeitungsbaustein umfasst. Eine umgebende Umkapselung besitzt eine Aussparung, über die ein Zugang zum Sensor bereitgestellt wird. Auch dieser Druckschrift sind keine Maßnahmen zum Schutz des Gassensors gegen unkontrollierte elektrische Entladungen zu entnehmen.

In der US 2015/0226688 ist ein resistiver Gassensor mit einer geerdeten Schutzkappe zum Schutz vor elektrostatischen Entladungen gezeigt.

In der WO 2016/132590 wird ein neben einem kapazitiven Feuchtesensor angeordneter Signalverarbeitungsbaustein durch ein unter dem Sensor angebrachtetes großflächiges, elektrisch leitfähiges Schutzelement vor elektromagnetischer Induktion geschützt.

Die WO 2014/185771 zeigt einen kapazitiven Feuchtesensor, der durch eine die Messelektroden umlaufende Elektrode vor einem Einfluss von Streukapazitäten geschützt wird.

Aus der WO 2015/122486 ist ein auf einem Halbleiterchip angeordneter kapazitiver Feuchtesensor mit einer integrierten Schutzelektrode zur Unterdrückung von Streukapazitäten bekannt. Hierbei ist die Schutzeleketrode großflächig zwischen Signalverarbeitungsbaustein und sensitiver Struktur angebracht.

### ZUSAMMENFASSUNG DER ERFINDUNG

Der vorliegenden Erfindung liegt die Aufgabe zugrunde, eine Feuchtesensor-Anordnung anzugeben, die auch im Fall von unkontrollierten elektrostatischen Entladungen möglichst nicht beschädigt wird und damit funktionsuntüchtig wird.

Diese Aufgabe wird erfindungsgemäß durch eine Feuchtesensor-Anordnung mit den Merkmalen des Anspruchs 1 gelöst.

Vorteilhafte Ausführungen der erfindungsgemäßen Feuchtesensor-Anordnung ergeben sich aus den Maßnahmen, die in den abhängigen Ansprüchen aufgeführt sind.

Über die erfindungsgemäßen Maßnahmen kann nunmehr zuverlässig verhindert werden, dass es auch im Fall unkontrollierter elektrostatischer Entladungen im Umfeld der Feuchtesensor-Anordnung nicht zu einer Beschädigung und einem Ausfall des Signalverarbeitungsbausteins kommt. Eine eventuelle elektrostatische Entladung auf den hochohmigen Feuchtesensor bzw. den Signalverarbeitungsbaustein wird vermieden und der resultierende Entladestrom anderweitig definiert abgeleitet. Der Entladestrom wird damit insbesondere nicht innerhalb des Signalverarbeitungsbausteins geleitet, sondern in vorzugsweise mindestens einem als Metallisierungsschicht ausgebildeten Ableitelement oberhalb einer Passivierungsschicht. Auf diese Art und Weise werden schnelle Spannungsabfälle und deren kapazitive Kopplungen, die durch den Entladestrom verursacht werden, nicht innerhalb des Signalverarbeitungsbausteins wirksam; es resultiert ein robustes Design des Signalverarbeitungsbausteins.

Weitere Einzelheiten und Vorteile der vorliegenden Erfindung seien anhand der nachfolgenden Beschreibung von Ausführungsbeispielen der erfindungsgemäßen Feuchtesensor-Anordnung in Verbindung mit den Figuren erläutert.

### KURZE BESCHREIBUNG DER ZEICHNUNGEN

Es zeigt
- Figur 1: eine perspektivische Ansicht eines Ausführungsbeispiels der erfindungsgemäßen Feuchtesensor-Anordnung;
- Figur 2: eine Teil-Explosionsdarstellung des Ausführungsbeispiels einer erfindungsgemäßen Feuchtesensor-Anordnung aus Figur 1;
- Figur 3: eine Draufsicht auf einen Teil der erfindungsgemäßen Feuchtesensor-Anordnung aus Figur 1;
- Figur 4a - 4c: verschiedene Schnittansichten der erfindungsgemäßen Feuchtesensor-Anordnung aus Figur 1;
- Figur 5: eine perspektivische Schnittansicht eines Teils des Ausführungsbeispiels der erfindungsgemäßen Feuchtesensor-Anordnung aus den vorhergehenden Figuren.

### BESCHREIBUNG DER AUSFÜHRUNGSFORMEN

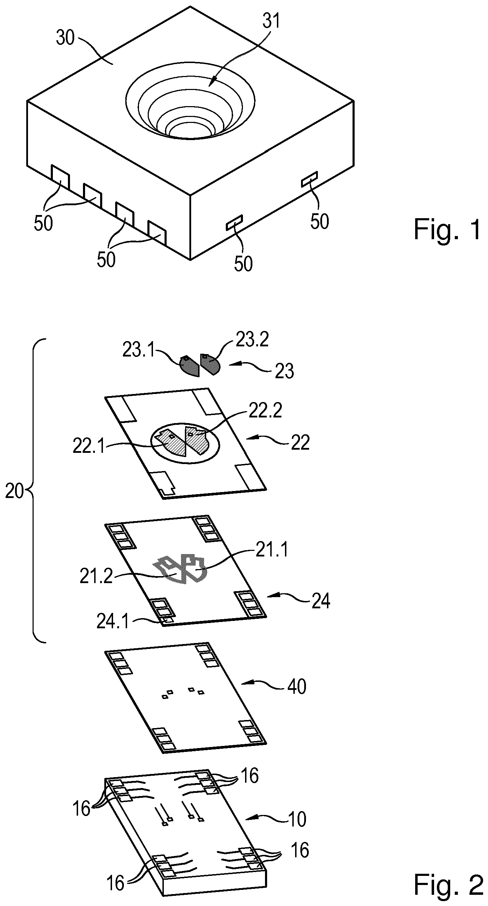

Ein Ausführungsbeispiel der erfindungsgemäßen Feuchtesensor-Anordnung wird im Folgenden anhand der Figuren 1 - 5 beschrieben.

In der anschließenden Beschreibung von Ausführungsbeispielen anhand der erwähnten Figuren wird richtungsbeschreibende Terminologie wie z. B. "Oberseite", "Unterseite" etc. verwendet, um die räumliche Orientierung einzelner Komponenten der erfindungsgemäßen Sensoranordnung 10 zueinander zu charakterisieren. Da es grundsätzlich möglich ist, diese Komponenten im Rahmen der vorliegenden Erfindung auch anderweitig zueinander zu positionieren, ist die hierzu nachfolgend genutzte Terminologie in keinster Weise beschränkend zu verstehen.

Figur 1 zeigt in einer perspektivischen Ansicht ein Ausführungsbeispiel der erfindungsgemäßen Sensor-Anordnung; weitere Details dieses Ausführungsbeispiels ergeben sich aus den Darstellungen der Figuren 2, 3, 4a - 4c sowie 5, die Explosionsdarstellungen sowie Drauf- und Schnittansichten von Teilen der Sensor-Anordnung ohne und mit Umkapselung sowie eine perspektivische Teil-Schnittansicht derselbigen zeigen.

Die erfindungsgemäße Sensor-Anordnung umfasst einen integrierten Signalverarbeitungsbaustein 10 bzw. ASIC, auf dem mindestens ein kapazitiver Feuchtesensor 20 angeordnet ist. Der Feuchtesensor 20 besteht aus einer ein- oder mehrteiligen, flächigen Grundelektrode 21.1, 21.2 einer oberhalb der Grundelektrode 21.1, 21.2 angeordneten Messschicht 22 mit feuchteabhängiger Kapazität und einer oberhalb der Messschicht 22 angeordneten feuchtedurchlässigen, ein-oder mehrteiligen flächigen Deckelektrode 23.1, 23.2; im Hinblick auf Details des Feuchtesensor-Aufbaus sei auf die nachfolgende Beschreibung verwiesen. Mit Hilfe des Feuchtesensors 20 werden feuchteabhängige Signale erzeugt, die das Gas charakterisieren, welches die Sensor-Anordnung umgibt und die vom Signalverarbeitungsbaustein 10 in weiterverarbeitbare Feuchtemesswerte umgewandelt werden. Die Feuchtemesswerte können dann von einer nachgeordneten, nicht dargestellten, Folgeelektronik in verschiedenster Art und Weise weiterverarbeitet werden.

Wie aus Figur 1 ersichtlich, umgibt eine Umkapselung 30 den Signalverarbeitungsbaustein 10 mindestens teilweise. Über die Umkapselung 30 wird der Signalverarbeitungsbaustein 10 sowohl gegenüber mechanischen Einflüssen als auch gegen Feuchtigkeit geschützt. Die Umkapselung 30 weist im Bereich der Deckelektrode 23.1, 23.2 des Feuchtesensors 20 eine Ausnehmung 31 auf, über die ein Zugang des umgebenden Gases zum Feuchtesensor 20 hergestellt wird. Im dargestellten Ausführungsbeispiel besitzt die Ausnehmung einen kreisförmigen Querschnitt und verengt sich trichterförmig bzw. kraterförmig von der Oberseite der Umkapselung 30 hin zum Feuchtesensor 20 bzw. zur Deckelektrode 23.1, 23.2 des Feuchtesensors 20. Die Formgebung der Umkapselung 30 erfolgt im Verlauf eines Transfer-Molding-Herstellungsprozesses derart, dass eine Quaderform der Sensor-Anordnung resultiert; als Material für die Umkapselung 30 dient z.B. Epoxidharz.

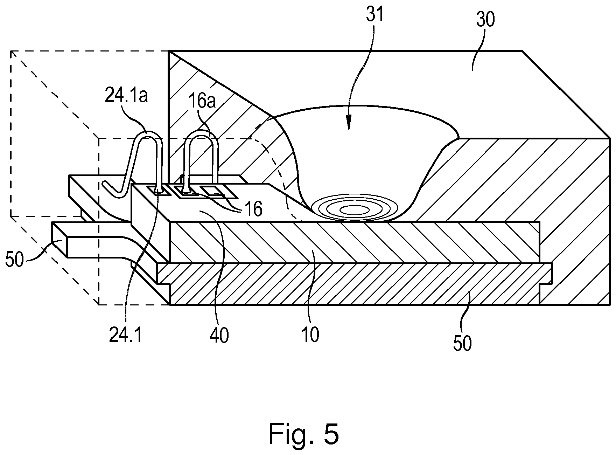

Der Signalverarbeitungsbaustein 10 ist innerhalb der Umkapselung 30 auf einem elektrisch leitfähigen Trägerelement 50 in Form eines sog. Leadframes angeordnet, von dem lediglich in den Figuren 1 bzw. 5 Teile erkennbar sind. Die elektrische Kontaktierung des Signalverarbeitungsbausteins 10 erfolgt wie in Figur 5 veranschaulicht über Bonddrähte 16a, die zwischen dem Trägerelement 50 und Kontaktierungsbereichen 16 bzw. Bondpads auf der Oberseite des Signalverarbeitungsbausteins 10 angeordnet werden. Das Trägerelement 50 wird dann elektrisch mit einer - nicht dargestellten - Folgeelektronik verbunden.

In der Ausnehmung 31 der Umkapselung 30 ist oberhalb des kapazitiven Feuchtesensors 20 desweiteren noch eine feuchte- bzw. gasdurchlässige, transparente Schutzschicht 60 mit einer Schichtdicke von ca. 15µm angeordnet. Die Schutzschicht 60 besitzt vorzugsweise hydrophobe bzw. wasserabweisende Eigenschaften und erstreckt sich über den gesamten Bereich der Ausnehmung 31. Über die Schutzschicht 60 werden insbesondere sämtliche metallische Strukturen der erfindungsgemäßen Feuchtsensor-Anordnung gegenüber äußeren Einflüssen geschützt.

Der konkrete Aufbau eines Ausführungsbeispiels der erfindungsgemäßen Feuchtesensor-Anordnung wird nachfolgend anhand der Figuren 2 - 5 im Detail weiter beschrieben.

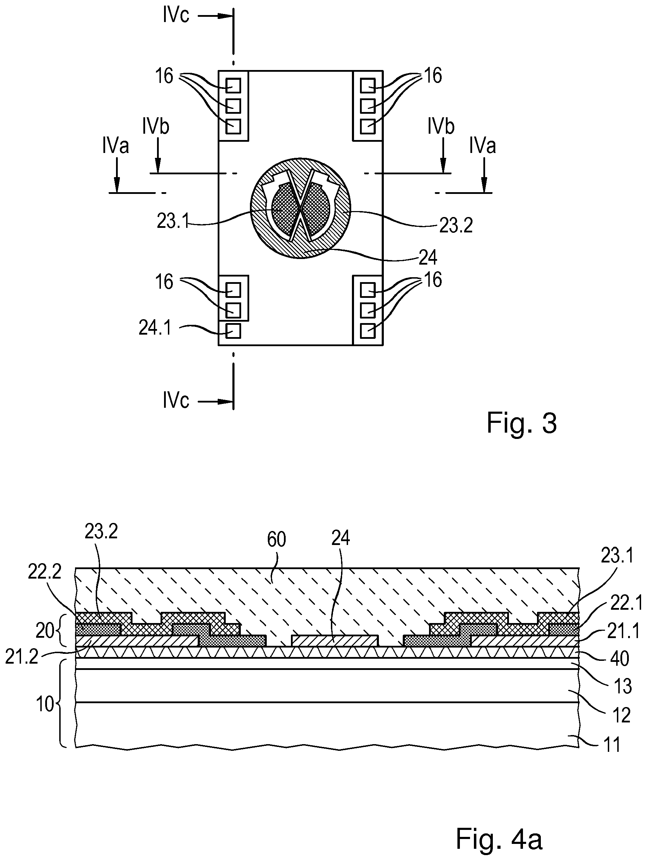

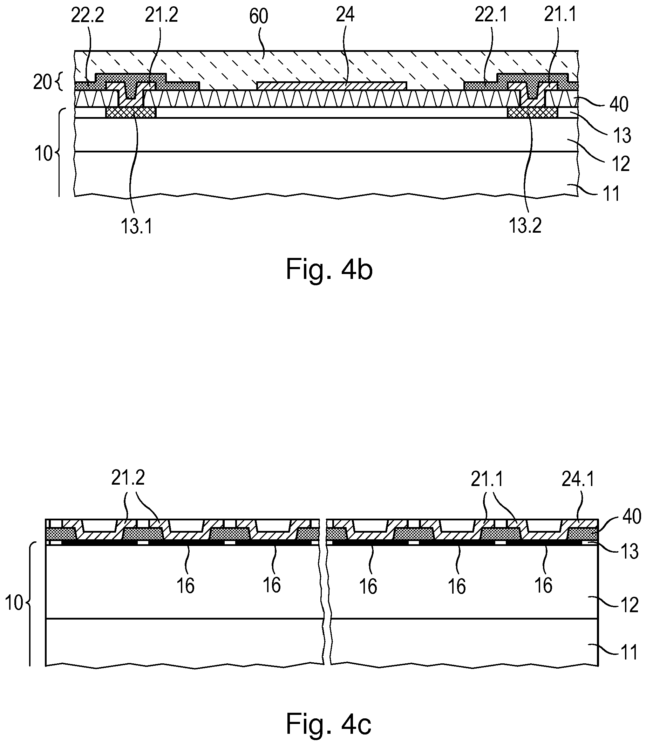

Wie aus den Schnittdarstellungen der Figuren 4a - 4c ersichtlich, wird der Signalverarbeitungsbaustein 10 auf seiner Oberseite, die dem Feuchtesensor 20 zugewandt ist, ganzflächig durch eine oberste Metallverdrahtungs-Ebene 13 begrenzt. In der obersten Metallverdrahtungsebene 13 sind hierbei unter anderem auch die Kontaktierungsbereiche 16 des Signalverarbeitungsbausteins 10 angeordnet, über die dieser mit dem Trägerelement 50 verbunden wird. Ferner sind dort weitere Kontaktierungsbereiche 13.1, 13.2 vorgesehen, über die der Signalverarbeitungsbaustein 10 mit dem darüber angeordneten Feuchtesensor 20 verbunden ist.

Unterhalb der obersten Metallverdrahtungsebene 13 befinden sich vorliegend weitere Verdrahtungsebenen 12 des Signalverarbeitungsbausteins 10. Im Bereich 11 darunter sind nicht näher gezeigte integrierte HalbleiterSchaltungen angeordnet, die beispielsweise zur Verarbeitung der erzeugten Signale des Feuchtesensors 20 dienen.

Über der obersten Metallverdrahtungsebene 13 des Signalverarbeitungsbausteins 10 ist im dargestellten Ausführungsbeispiel eine ganzflächige Passivierungsschicht 40 angeordnet, die etwa aus SiO₂ und SiNO ausgebildet ist und zum Schutz der darunterliegenden Schichten gegenüber Feuchteeinflüssen dient. Die Passivierungsschicht 40 überdeckt dabei wie aus Figur 2 ersichtlich die komplette Oberseite des Signalverarbeitungsbausteins 10 und weist am Ort der Kontaktierungsbereiche 16 Ausnehmungen für die dort anzuordnenden Bonddrähte 16a sowie zentrale Ausnehmungen für die Kontaktierungsstellen des Feuchtesensors 20 auf.

Über der Passivierungsschicht 40 ist der Feuchtesensor-Aufbau in der erfindungsgemäßen Anordnung vorgesehen, der als kapazitiver Feuchtesensor 20 in Form eines Plattenkondensators ausgebildet ist. Hierzu ist in einer über der Passivierungsschicht 40 liegenden Grundelektrodenebene die ein- oder mehrteilige, flächige Grundelektrode 21.1, 21.2 angeordnet; vorzugsweise ist als Material für die Grundelektrode 21.1, 21.2 ein geeignetes leitfähiges Material wie etwa Metall vorgesehen, beispielsweise Gold. Wie etwa aus Figur 2 ersichtlich, ist die Grundelektrode 21.1, 21.2 im vorliegenden Ausführungsbeispiel zweiteilig ausgebildet. Diese umfasst zwei kreissegmentförmige Grundelektroden 21.1, 21.2, die einander spiegelsymmetrisch gegenüberliegen und im Bereich der Projektion der kreisförmigen Ausnehmung 31 der Umkapselung 30 in der Grundelektrodenebene angeordnet sind. Die beiden kreissegmentförmigen Grundelektroden 21.1, 21.2 bedecken in dieser Ebene hierbei nur einen Teil der kreisförmigen Ausnehmungs-Projektion.

Im Bereich der Ausnehmung 31 der Umkapselung 30 bzw. im dargestellten Ausführungsbeispiel im nicht von der Grundelektrode 21.1, 21.2 überdeckten Teil der kreisförmigen Ausnehmungs-Projektion sind in der Grundelektrodenebene zumindest Teile eines niederohmigen, elektrisch leitfähigen Ableitelements 24 angeordnet. Über das Ableitelement 24 ist im Fall einer elektrostatischen Entladung in der Nähe der Sensor-Anordnung sichergestellt, dass der dabei resultierende Entladestrom mindestens insoweit ableitbar ist, dass empfindliche Bereiche des darunter liegenden Signalverarbeitungsbausteins 10 ungefährdet bleiben. Eine eventuelle elektrostatische Entladung wird damit auf das Ableitelement 24 stattfinden und nicht auf den hochohmigen Feuchtesensor 20, der elektrisch leitend mit dem Signalverarbeitungsbaustein 10 verbunden ist. Das Ableitelement 24 besteht aus einer dünnen Metallschicht; geeignet hierzu ist beispielsweise Gold; die Dicke der Metallschicht beträgt etwa 0.5µm. Vorzugsweise besitzt die Metallschicht des Ableitelements 24 eine niedrigere elektrische Leitfähigkeit als andere metallische Komponenten des kapazitiven Feuchtesensors 20, also beispielsweise dessen Grund- und Deckelektroden 21.1, 21.2, bzw. 23.1, 23.2.

Wie ferner aus den Figuren ersichtlich, überdeckt das Ableitelement 24 lediglich einen Teil der Ausnehmungs-Projektion und läuft in Richtung des Zentrums der Ausnehmungs-Projektion spitz zu. So ist im dargestellten Ausführungsbeispiel vorgesehen, dass die im Bereich der Ausnehmungs-Projektion angeordneten Teile des Ableitelements 24 wie aus Figur 2 ersichtlich eine in etwa kreissegmentförmige Form aufweisen. Hierbei entspricht der zugehörige Kreismittelpunkt der Mitte der Ausnehmung 31 bzw. der Ausnehmungsprojektion. Die Spitze des kreissegmentförmigen Ableitelements 24 ist demnach jeweils in Richtung der Mitte der Ausnehmung bzw. Ausnehmungsprojektion gerichtet. Desweiteren erstreckt sich das Ableitelement 24 wie ebenfalls aus Figur 2 erkennbar außerhalb der Ausnehmungs-Projektion über den gesamten Flächenbereich auf der Oberseite des Signalverarbeitungsbausteins 10.

Das Ableitelement 24 leitet den Entladestrom im Fall einer elektrostatischen Entladung gegen Masse ab und besitzt hierzu einen Kontaktierungsbereich 24.1, über den es vorliegend mit Hilfe eines Bonddrahts 24.1a mit dem Trägerelement 50 elektrisch leitend verbunden ist, wie dies in Figur 5 gezeigt ist. Das Trägerelement 50 weist zum Ableiten des Entladestroms ferner einen dargestellten Masse-Anschluss 51.1 auf.

Es sei an dieser Stelle darauf hingewiesen, dass die in diesem Beispiel gewählte Geometrie und Anordnung des Ableitelements 24 nicht zwingend in dieser Form erforderlich ist. So kann das Ableitelement etwa sowohl ein- oder mehrteilig ausgebildet werden; alternativ zur ganzflächigen Anordnung in der Grundelektrodenebene kann das Ableitelement auch nur in einem Teil dieser Ebene vorgesehen. Desweiteren wäre es möglich, das Ableitelement in einer der Metallverdrahtungsebenen des Signalverarbeitungsbausteins auszubilden.

Grundsätzlich vorteilhaft bezüglich der Funktion des Ableitelements erweist sich hierbei, wenn das Ableitelement sich dort befindet, wo die Schutzschicht in der Ausnehmung die geringste Dicke aufweist. Im Fall unkontrollierter elektrostatischer Entladungen ist dann zuverlässig gewährleistet, dass der Entladestrom über das Ableitelement zuverlässig abgeleitet werden kann.

Der kapazitive Feuchtesensor 20 umfasst im dargestellten Ausführungsbeispiel neben der Grundelektrode 21.1, 21.2 desweiteren die Messschicht 22, 22.1, 22.2. Die vorliegend mehrteilig ausgebildete Messschicht 22, 22.1, 22.2 ist in einer über der Grundelektrodenebene liegenden Messschichtebene angeordnet und besteht aus einem Material, welches eine feuchteabhängige Kapazität aufweist, etwa ein geeignetes Dielektrikum wie z.B. Polyimid. Hierbei bedeckt die Messschicht 22, 22.1, 22.2 mindestens einen Bereich oberhalb der Grundelektrode 21.1, 21.2, der flächenmäßig der Geometrie der Grundelektrode 21.1, 21.2 entspricht. Im dargestellten Ausführungsbeispiel erstreckt sich die Messschicht 22 in der Messschichtebene wie in Figur 2 erkennbar desweiteren über einen großen Teil der Oberseite des Signalverarbeitungsbausteins 10. Zumindest oberhalb der kreissegmentförmigen Ableitelement-Bereiche in der Ausnehmungsprojektion ist jedoch keine Messschicht vorgesehen; im Bereich des mindestens einen Ableitelements 24 weist die Messschicht 22, 22.1, 22.2 Aussparungen bzw. Ausnehmungen auf.

Oberhalb der Messschichtebene folgt die Deckelektrodenebene, in der die vorliegend ebenfalls zweiteilige Deckelektrode 23.1, 23.2 angeordnet ist, die aus einem feuchte- bzw. gasdurchlässigen, leitfähigen Material besteht. Hierzu kann ebenfalls ein Metall eingesetzt werden, das Risse aufweist, um die Feuchtdurchlässigkeit zu gewährleisten, beispielweise Chrom. Die Geometrie der beiden Deckelektroden 23.1, 23.2 entspricht derjenigen der Grundelektroden 21.1, 21.2, d.h. im Bereich der Ausnehmungs-Projektion in die Deckelektrodenebene sind zwei kreissegmentförmige Deckelektroden 23.1, 23.2 vorgesehen, die einander spiegelsymmetrisch gegenüberliegen.

Der kapazitive Feuchtesensor 20 wird in bekannter Art und Weise betrieben, wobei aus der Bestimmung der sich feuchteabhängig ändernden Kapazität der Messschicht 22, 22.1, 22.2 entsprechende Feuchte-Messwerte erzeugt werden können.

Es ist beispielsweise möglich, den kapazitiven Feuchtesensor nicht als flächigen Plattenkondensator auszubilden, sondern die Elektroden als Interdigitalstruktur auszuführen, zwischen denen das feuchteempfindliche Dielektrikum platziert ist. Die Interdigitalstruktur könnte etwa in einer der Metallverdrahtungsebenen des Signalverarbeitungsbausteins werden.

## Patentansprüche

1. Feuchtesensor-Anordnung mit
- einem integrierten Signalverarbeitungsbaustein,
- mindestens einem auf dem Signalverarbeitungsbaustein angeordneten kapazitiven Feuchtesensor,
- einer Umkapselung, die den Signalverarbeitungsbaustein teilweise umgibt und im Bereich des Feuchtesensors eine Ausnehmung aufweist,
**dadurch gekennzeichnet, dass** mindestens ein niederohmiges, elektrisch leitfähiges Ableitelement (24), im Bereich der Ausnehmung (31) angeordnet ist, über das im Fall einer elektrostatischen Entladung der resultierende Entladestrom ableitbar ist, wobei das Ableitelement (24) als Metallschicht ausgebildet ist, lediglich einen Teil der Ausnehmungs-Projektion überdeckt und in Richtung des Zentrums der Ausnehmungs-Projektion spitz zuläuft.

2. Feuchtesensor-Anordnung nach Anspruch 1, mit einem kapazitiven Feuchtesensor, bestehend aus
- mindestens einer auf dem Signalverarbeitungsbaustein (10) angeordneten flächigen Grundelektrode (21.1, 21.2),
- einer oberhalb der Grundelektrode (21.1, 21.2) angeordneten Messschicht (22, 22.1, 22.2), deren Kapazität sich feuchteabhängig ändert sowie
- mindestens einer oberhalb der Messschicht (22, 22.1, 22.2) angeordneten, feuchtedurchlässigen, flächigen Deckelektrode (23.1, 23.2).

3. Feuchtesensor-Anordnung nach Anspruch 2, wobei die Flächen der Grundelektrode (21.1, 21.2) und/oder der Deckelektrode (23.1, 23.2) jeweils nur einen Teil der Ausnehmungs-Projektion in die Grundelektrodenebene und/oder die Deckelektrodenebene überdecken.

4. Feuchtesensor-Anordnung nach Anspruch 3, wobei mindestens im nicht-überdeckten Teil der Ausnehmungs-Projektion in der Grundelektrodenebene ein oder mehrere Ableitelemente (24) angeordnet sind.

5. Feuchtesensor-Anordnung nach Anspruch 2, wobei die Ausnehmung (31) einen kreisförmigen Querschnitt aufweist und die Grundelektrode (21.1, 21.2) und/oder die Deckelektrode (23.1, 23.2) im Bereich der Ausnehmungs-Projektion in die Grundelektrodenebene und/oder die Deckelektrodenebene jeweils kreissegmentförmig ausgebildet sind.

6. Feuchtesensor-Anordnung nach Anspruch 5, wobei die Grundelektrode (21.1, 21.2) und/oder die Deckelektrode (23.1, 23.2) jeweils zwei Kreissegmente umfassen, die in der Grundelektrodenebene oder der Deckelektrodenebene angeordnet sind und einander jeweils spiegelsymmetrisch gegenüberliegen und mindestens in den Bereichen außerhalb der Kreissegmente zwei kreissegmentförmige Ableitelemente (24) angeordnet sind, die einander ebenfalls spiegelsymmetrisch gegenüberliegen.

7. Feuchtesensor-Anordnung nach Anspruch 4 oder 6, wobei das mindestens eine Ableitelement (24) sich außerhalb der Ausnehmungs-Projektion über weitere Flächenbereiche oberhalb des Signalverarbeitungsbausteins (10) erstreckt.

8. Feuchtesensor-Anordnung nach Anspruch 7, wobei sich das mindestens eine Ableitelement (24) außerhalb der Ausnehmungs-Projektion über den gesamte Flächenbereich des Signalverarbeitungsbausteins (10) erstreckt.

9. Feuchtesensor-Anordnung nach Anspruch 2, wobei
- der Signalverarbeitungsbaustein (10) in Richtung des Feuchtesensors (20) eine oberste Metallverdrahtungs-Ebene (13) aufweist und
- über der Metallverdrahtungs-Ebene (13) eine Passivierungsschicht (40) angeordnet ist und
- in einer über der Passivierungsschicht (40) liegenden Grundelektroden-Ebene die mindestens eine Grundelektrode (21.1, 21.2) sowie das mindestens eine Ableitelement (24) angeordnet sind und
- in einer über der Grundelektroden-Ebene liegenden Messschicht-Ebene die Messschicht (22, 22.1, 22.2) angeordnet ist, die zumindest Aussparungen im Bereich des mindestens einen Ableitelements (24) umfasst und
- in einer über der Messschicht-Ebene liegenden Deckelektroden-Ebene die mindestens eine Deckelektrode (23.1, 23.2) oberhalb der mindestens einen Grundelektrode angeordnet ist.

10. Feuchtesensor-Anordnung nach Anspruch 1, wobei die Metallschicht eine niedrigere elektrische Leitfähigkeit aufweist als die anderen metallischen Komponenten des kapazitiven Feuchtesensors (20).

11. Feuchtesensor-Anordnung nach mindestens einem der vorhergehenden Ansprüche, wobei das mindestens eine Ableitelement (24) den Entladestrom gegen Masse ableitet.

12. Feuchtesensor-Anordnung nach mindestens einem der vorhergehenden Ansprüche, wobei in der Ausnehmung (31) oberhalb des kapazitiven Feuchtesensors (20) eine feuchtedurchlässige Schutzschicht (60) angeordnet ist.

13. Feuchtesensor-Anordnung nach Anspruch 12, wobei das mindestens eine Ableitelement (24) in einem Bereich der Ausnehmung (31) liegt, in dem die Schutzschicht (60) die geringste Dicke aufweist.

## Claims

1. Moisture sensor arrangement comprising
- an integrated signal processing module,
- at least one capacitive moisture sensor arranged on the signal processing module,
- an encapsulation, which partly surrounds the signal processing module and has a recess in the region of the moisture sensor,
**characterized in that**
at least one low-impedance, electrically conductive diverting element (24) is arranged in the region of the recess (31), by means of which diverting element the discharge current resulting in the event of an electrostatic discharge can be diverted, wherein the diverting element (24) is formed as a metal layer, covers only a part of the recess projection and tapers in the direction of the centre of the recess projection.

2. Moisture sensor arrangement according to Claim 1, comprising a capacitive moisture sensor, consisting of
- at least one planar bottom electrode (21.1, 21.2) arranged on the signal processing module (10),
- a measurement layer (22, 22.1, 22.2) arranged above the bottom electrode (21.1, 21.2), the capacitance of which measurement layer changes in a manner dependent on moisture, and
- at least one moisture-permeable, planar top electrode (23.1, 23.2) arranged above the measurement layer (22, 22.1, 22.2).

3. Moisture sensor arrangement according to Claim 2, wherein the surfaces of the bottom electrode (21.1, 21.2) and/or of the top electrode (23.1, 23.2) each cover only a part of the recess projection into the bottom electrode plane and/or the top electrode plane.

4. Moisture sensor arrangement according to Claim 3, wherein, at least in the non-covered part of the recess projection, one or more diverting elements (24) are arranged in the bottom electrode plane.

5. Moisture sensor arrangement according to Claim 2, wherein the recess (31) has a circular cross section and the bottom electrode (21.1, 21.2) and/or the top electrode (23.1, 23.2) in the region of the recess projection into the bottom electrode plane and/or the top electrode plane are each of circular segment shape.

6. Moisture sensor arrangement according to Claim 5, wherein the bottom electrode (21.1, 21.2) and/or the top electrode (23.1, 23.2) each comprise two circular segments arranged in the bottom electrode plane or the top electrode plane and respectively located opposite one another in a mirror-symmetrical manner and two circular-segment -shaped diverting elements (24), which are likewise located opposite one another in a mirror-symmetrical manner, are arranged at least in the regions outside of the circular segments.

7. Moisture sensor arrangement according to Claim 4 or 6, wherein the at least one diverting element (24) extends outside of the recess projection over further surface regions above the signal processing module (10).

8. Moisture sensor arrangement according to Claim 7, wherein the at least one diverting element (24) extends outside of the recess projection over the entire surface region of the signal processing module (10).

9. Moisture sensor arrangement according to Claim 2, wherein
- the signal processing module (10) has a topmost metal wiring plane (13) in the direction of the moisture sensor (20) and
- a passivation layer (40) is arranged above the metal wiring plane (13) and
- the at least one bottom electrode (21.1, 21.2) and the at least one diverting element (24) are arranged in a bottom electrode plane lying above the passivation layer (40) and
- the measurement layer (22, 22.1, 22.2) comprising at least recesses in the region of the at least one diverting element (24) is arranged in a measurement layer plane lying above the bottom electrode plane and
- the at least one top electrode (23.1, 23.2) above the at least one bottom electrode is arranged in a top electrode plane lying above the measurement layer plane.

10. Moisture sensor arrangement according to Claim 1, wherein the metal layer has a lower electrical conductivity than the other metal components of the capacitive moisture sensor (20).

11. Moisture sensor arrangement according to one of the preceding claims, wherein the at least one diverting element (24) diverts the discharge current to earth.

12. Moisture sensor arrangement according to one of the preceding claims, wherein a moisture-permeable protective layer (60) is arranged in the recess (31) above the capacitive moisture sensor (20).

13. Moisture sensor arrangement according to Claim 12, wherein the at least one diverting element (24) is located in a region of the recess (31) in which the protective layer (60) has the smallest thickness.

## Revendications

1. Ensemble de capteurs d'humidité comprenant
- un module de traitement de signal intégré,
- au moins un capteur d'humidité capacitif disposé sur le module de traitement de signal,
- un enrobage qui entoure partiellement le module de traitement de signal et qui comporte un évidement dans la région du capteur d'humidité,
**caractérisé en ce que**
au moins un élément de dérivation (24) électriquement conducteur et à faible résistance est disposé dans la région de l'évidement (31), lequel élément de dérivation permet de dériver le courant de décharge résultant en cas de décharge électrostatique, l'élément de dérivation (24) étant conçu sous forme d'une couche métallique, recouvrant seulement une partie de la projection à évidement et s'étendant en pointe en direction du centre de la projection à évidement.

2. Ensemble de capteurs d'humidité selon la revendication 1, comprenant un capteur d'humidité capacitif qui comporte
- au moins une électrode de base (21.1, 21.2) sensiblement bidimensionnelle qui est disposée sur le module de traitement de signal (10),
- une couche de mesure (22, 22.1, 22.2) qui est disposée au-dessus de l'électrode de base (21.1, 21.2) et dont la capacité varie en fonction de l'humidité et
- au moins une électrode de recouvrement (23.1, 23.2) sensiblement bidimensionnelle qui est perméable à l'humidité et qui est disposée au-dessus de la couche de mesure (22, 22.1, 22.2).

3. Ensemble de capteurs d'humidité selon la revendication 2, les surfaces de l'électrode de base (21.1, 21.2) et/ou de l'électrode de recouvrement (23.1, 23.2) recouvrant chacune seulement une partie de la projection à évidement jusque dans le plan de l'électrode de masse et/ou le plan de l'électrode de recouvrement.

4. Ensemble de capteurs d'humidité selon la revendication 3, au moins un élément de dérivation (24) étant disposé au moins dans la partie non recouverte de la projection à évidement dans le plan d'électrode de base.

5. Ensemble de capteurs d'humidité selon la revendication 2, l'évidement (31) ayant une section transversale circulaire et l'électrode de base (21.1, 21.2) et/ou l'électrode de recouvrement (23.1, 23.2) ayant chacune une forme de segment de cercle dans la région de la projection à évidement jusque dans le plan d'électrode de base et/ou le plan d'électrode de recouvrement.

6. Ensemble de capteurs d'humidité selon la revendication 5, l'électrode de base (21.1, 21.2) et/ou l'électrode de recouvrement (23.1, 23.2) comprenant chacune deux segments de cercle qui sont disposés dans le plan d'électrode de base ou dans le plan d'électrode de recouvrement et qui se font face en symétrie de miroir et deux éléments de dérivation (24), en forme de segment de cercle se faisant également face en symétrie de miroir, étant disposés au moins dans les régions situées à l'extérieur des segments de cercle.

7. Ensemble de capteurs d'humidité selon la revendication 4 ou 6, l'au moins un élément de dérivation (24) s'étendant à l'extérieur de la projection à évidement sur d'autres surfaces au-dessus du module de traitement de signal (10).

8. Ensemble de capteurs d'humidité selon la revendication 7, l'au moins un élément de dérivation (24) s'étendant à l'extérieur de la projection à évidement sur toute la région de surface du module de traitement de signal (10).

9. Ensemble de capteurs d'humidité selon la revendication 2,
- le module de traitement de signal (10) comportant en direction du capteur d'humidité (20) un plan de câblage métallique supérieur (13) et
- une couche de passivation (40) étant disposée sur le plan de câblage métallique (13) et
- l'au moins une électrode de base (21,1, 21.2) et l'au moins un élément de dérivation (24) étant disposés dans un plan d'électrode de base situé au-dessus de la couche de passivation (40), et
- la couche de mesure (22, 22.1, 22.2), qui comprend au moins des évidements dans la région de l'au moins un élément de dérivation (24), étant disposée dans un plan de couche de mesure situé au dessus du plan d'électrode de base et,
- l'au moins une électrode de recouvrement (23.1, 23.2) située au-dessus de l'au moins une électrode de base étant disposée dans un plan d'électrode de recouvrement situé au-dessus du plan de couche de mesure.

10. Ensemble de capteurs d'humidité selon la revendication 1, la couche métallique ayant une conductivité électrique inférieure à celle des autres composants métalliques du capteur d'humidité capacitif (20) .

11. Ensemble de capteurs d'humidité selon au moins l'une des revendications précédentes, l'au moins un décharge de dérivation (24) dérivant le courant de

12. Ensemble de capteurs d'humidité selon au moins l'une des revendications précédentes, une couche protectrice (60) imperméable à l'humidité étant disposée dans l'évidement (31) au-dessus du capteur d'humidité capacitif (20).

13. Ensemble de capteurs d'humidité selon la revendication 12, l'au moins un élément de dérivation (24) étant situé dans une région de l'évidement (31) dans laquelle la couche protectrice (60) a l'épaisseur la plus faible.
